Europäisches Patentamt

European Patent Office

Office européen des brevets

(11) Publication number: **0 505 782 A2**

# EUROPEAN PATENT APPLICATION

(21) Application number: **92103761.0**

(22) Date of filing: **05.03.92**

(51) Int. Cl.⁵: **G06F  15/16**

(30) Priority: **29.03.91 US 677543**
**27.11.91 US 799497**

(43) Date of publication of application:
**30.09.92 Bulletin  92/40**

(84) Designated Contracting States:
**DE FR GB**

(71) Applicant: **International Business Machines**
**Corporation**
**Old Orchard Road**
**Armonk, N.Y. 10504(US)**

(72) Inventor: **Olnowich, Howard Thomas**
**2922 Twilight Drive**
**Endwell, New York 13760(US)**
Inventor: **Barker, Thomas Norman**
**136 Sunset Drive**
**Vestal, New York 13850(US)**
Inventor: **Frasaszek, Peter Anthony**
**Pine Tree Drive**
**Katonah, New York 10536(US)**
Inventor: **Heidelberger, Philip**
**24 Lakeview Avenue West**
**Peekskill, New York 10566(US)**
Inventor: **Rathi, Bharat Deep**
**167-C, Rt. 8, Lakeview Drive**
**Mahopac, New York 10541(US)**
Inventor: **Varma, Anujan Mangala**
**102 Hagar Court**
**Santa Cruz, CA 95064(US)**

(74) Representative: **Rudolph, Wolfgang, Dipl.-Ing.**
**IBM Deutschland GmbH Schönaicher**
**Strasse 220**
**W-7030 Böblingen(DE)**

(54) **Multi-function network.**

(57) A multi-stage switch architecture for providing for using a single switching component in multiplicity to create a single network capable of performing a multiplicity of functions. One function of the disclosed network is to circumvent the traditional blocking problems in multi-stage networks by implementing ALTERNATE PATHS between all N and M devices within the same network. This permits a non-blocked path between 2 devices to be found by "rearrangeability" - the act of trying or searching different alternate paths until a non-blocked connection is established. The rearrangeability architecture disclosed is implemented completely in hardware, and is performed automatically and transparently in relation to the software. A second network function permits the ALTERNATE PATHS to be used selectively for GUARANTEED DELIVERY - a special high priority mode of transfer which will guarantee that the connection will be made to an IDLE device as rapidly as possible, even when "Hot" spots in the network traffic patterns are encountered. In addition, the ALTERNATE PATHS provide another function of providing a more fault tolerant network than provided by state-of-the-art solutions.

As a result of our inventions we provide a single, unidirectional, unbuffered, multi-stage network capable of doing the total network job consisting of multiple functions. The functional complexity provided usually requires several state-of -the-art multi-stage networks to perform the equivalent job. The single network disclosed here allows traffic in both directions, provides for non-blocking via ALTERNATE PATHS and REARRANGEABILITY, incorporates GUARANTEED DELIVERY and FAULT TOLERANCE, and yet is very compact and inexpensive to implement. In addition, the network is modular in nature and permits easy adaptation to any sized system.

IN PORT 1 —11 LINES→  8 X 8 CROSSBAR SWITCH  11→ OUT PORT 1

IN PORT 2 —11→  OUT PORT 2

IN PORT 3 —11→  OUT PORT 3

IN PORT 4 —11→  • ANY INPUT TO ANY OUTPUT  11→ OUT PORT 4

IN PORT 5 —11→  • UP TO 8 SIMULTANEOUS CONNECTIONS  11→ OUT PORT 5

IN PORT 6 —11→  • BROADCAST IS PERMISSIBLE  11→ OUT PORT 6

IN PORT 7 —11→  • 176 I/O PINS REQUIRED  11→ OUT PORT 7

IN PORT 8 —11→  10  11→ OUT PORT 8

(GUARANTEED DELIVERY)    HI-PRI

VALID

REJECT

BYTE-WIDE DATA — 8 LINES

IN/OUT PORT INTERFACE — 11 LINES

FIG.1

The invention relates to a multi-stage network system.

The present application claims priority of the Patent Application:
"All-Node Switch, An Unclocked, Unbuffered Asynchronous Switching Apparatus" by P.A. Franasek et al, U.S.S.N. 07/677,543, filed March 29, 1991 (IBM Docket EN 988 078), filed in Europe February 3, 1992, application no. 92 101 705.9.

This co-pending application and the present application are owned by one and the same assignee, namely, International Business Machines Corporation of Armonk, New York, USA.

The description set forth in the co-pending application is hereby incorporated into the present application by this reference.

Multi-stage Switching Networks have become an accepted means for interconnecting multiple devices within a computer system. Often systems require multiple paths through the switching networks to perform different functions. An earlier work at IBM by Peter Franaszek, as described in his work entitled "Multipath Hierarchies in Interconnection Networks" described two hierarchical paths for a network, one providing low-latency message transfer and the other providing guaranteed-delivery of a message transfer and the other providing guaranteed-delivery of a message at a longer latency. A message is attempted over the low-latency path first. If the transmission fails due to blocking or contention, it is retransmitted over the guaranteed-delivery path. This allows usually about 90% of the messages to be sent successfully over the low-latency path, and guarantees the delivery of a message that gets blocked on the low-latency path due to retransmissions.

U.S. Patent 4,952,930 to P. A. Franaszek et al. issued Aug. 28, 1990 described the approach which used a second buffered path, which is in some ways similar to the current approach. However, it suffered by its requirements of a plurality of switches to implement it. While there would be no impediment to our adopting the teachings of this patent there remained a need for a simpler and yet more flexible approach to create a multi-stage network.

Multi-stage networks have become an accepted means for interconnecting multiple devices within a computer system. They are a replacement for the traditional crossbar interconnection. The crossbar is still a most efficient method of network interconnection, but it tends to be impractical for large systems. An NxM crossbar permits total simultaneous interconnection, where all the N devices can be communicating simultaneously with different members of the set of M devices. The crossbar is "non-blocking" because their is nothing internal to the crossbar which prevents any given N device from connecting to an M device which is IDLE (is not connected to some other N device). If an N device desires to connect to an M device which is BUSY (previously connected to some other N device), no connection can be made until the previous connection is broken -- however, this is referred to as "contention" and is not called "blocking".

When N and M become large (usually greater than 32 or 64) it becomes very unwieldy to build crossbars since there complexity increases at an NxM rate and their pin count increases at an (NxM)xW rate, where W = the number of pins per port. Thus large networks are usually built from multi-stage networks constructed by cascading several stages of smaller crossbars together to provide an expanded network. The disadvantage of multi-stage networks is that they are "blocking", i.e., a connection might not be able to be made to an IDLE M device because there is no path available in the network to provide the necessary connection to the IDLE device.

Among other patents which might be reviewed are: U.S. Patent 4,914,571 to A. E. Baratz et al. issued Apr. 3, 1990 which describes a method of addressing and thus how to find resources attached to a network, but does not deal with the hardware for the actual network itself.

U.S. Patent 4,455,605 to R. L. Cormier et al. issued June 19, 1984 which is for a bus oriented system, it is not a multi-stage network. Similarly, U.S. Patent 4,396,984 to E. R. Videki, II issued Aug. 2, 1983 is for an I/O bus channel, not a multistage network. U.S. Patent 4,570,261 to J. W. Maher issued Feb. 11, 1986 is for fault recovery over a bus oriented system, not a multi-stage network.

U.S. Patent 4,207,609 to F. A. Luiz et al. issued June 10, 1980 illustrates an I/O bus channel so that those in the art will understand the differences between the subject matter. It is not a multi-stage network.

U.S. Patent 4,873,517 to A. E. Baratz et al. issued Oct. 10, 1989 is for a totally different type of network, not an equi-distant multi-stage network like that which we will describe, and also, U.S. Patent 4,932,021 to T. S. Moody issued June 5, 1990 for bus wiring paths inside a computer box, it is not a multi-stage network. U.S. Patent 4,733,391 to R. J. Godbold et al. issued Mar. 22, 1988 illustrates a ring interconnection network, which is unlike a multi-stage network. U.S. Patent 4,811,201 to B. R. Rau et al. issued Mar. 7, 1989 are not applicable to a multi-stage network. U.S. Patent 4,754,395 to B. P Weisshaar et al. issued June 28, 1988 is for a ring interconnection network.

We have solved some of the problems encountered in the prior art and will describe a way whereby some of the traditional blocking problems in multi-stage networks are circumvented.

The solution is described in the characterizing part of claim 1.

The traditional blocking problems in multi-stage networks is circumvented by implementing ALTERNATE PATHS between all N and M devices within the same network. This permits a non-blocked path between 2 devices to be found by "rearrangeability"- The act of trying or searching different alternate paths until a non-blocked connection is established. It also permits some of the ALTERNATE PATHS to be used for GUARANTEED DELIVERY -- a special high priority mode of transfer which will guarantee that the connection will be made to an IDLE device as rapidly as possible. In addition, the ALTERNATE PATHS provide a much more fault tolerant network than provided by state-of-the-art solutions.

As a result of our inventions we provide a single, unidirectional, unbuffered, multi-stage network capable of doing the total network job consisting of multiple functions. The functional complexity provided usually requires four or more state-of - the-art multi-stage networks to perform the equivalent job. The single network disclosed here allows traffic in both directions, provides for non-blocking via ALTERNATE PATHS and REARRANGEABILITY, incorporates GUARANTEED DELIVERY and FAULT TOLERANCE,and yet is very compact and inexpensive to implement. In addition, the network is modular in nature and permits easy adaptation to any sized system.

We will describe in the following detailed inventions further features and improvements. A reader may wish to obtain further background by reading the features and improvements of the related applications referenced above which are hereby included by reference. References in the following detailed description refer to the drawings which are provided herewith.

Fig. 1    illustrates a basic element of the network, which as a preferred embodiment is chosen to be an 8x8 crossbar switch as illustrated.

Fig. 2    is composed of two parts, wherein Figure 2a, shows the interconnection of N processors to N memories via a multi-stage network; and

Fig. 2b    shows a nodal embodiment for both a processor and memory; i.e., both processor and memory reside on the same side of the network.

Fig. 3    has two parts, wherein Figure 3a shows the interconnection of 16 nodes using one MULTI-FUNCTION NETWORK composed of four 8x8 crossbar switch chips; and Fig. 3b shows alternate paths which can be established by connecting the previously unused ports.

Fig. 4    four has two parts, wherein Fig. 4a shows a 64 node network built from 2 stages which has only 1 unique path between nodes and doesn't have any additional paths; and, Figure 4b shows that by adding a stage and going to a 3-stage network as applied to a 32 node system, 8 alternate paths would exist between any two nodes.

Fig. 5    shows the simple hardware implementation of rearrangeability, hot spot detection, and changing over to Guaranteed Delivery mode.

Before turning to the drawings, it should be noted that the ALL-NODE switch described in the related applications is applicable to the present inventions. The switch first described in USSN 07/677,543 (EP No. 92 101 705.9) may be an 8x8 switch as well as a 4x4 switch as there described, as will appreciated by those skilled in the art. In such a switch the four data lines would be replicated and increased to eight data lines while the other features of the inventions are present.

The preferred switch thus is an Asynchronous, Low Latency inter Node crossbar switch which is self routing in two cycle times at the same high speed serial rate that that is transferred through the switch. The normal mode of the switch should require no synchronization means among any of its input and output ports which interface to the switch. The switch is completely void of centrally controlled clocking and data buffering. Data which traverses the switch should only encounter three gate delays, an on chip receiver, a multiplexer, and an off chip driver. Contention will be detected and resolved on the chip, and the logic implementation, as described in the related applications is simple and low in gate count. Such a switch will comprise for a node of a network a plurality of input and output ports, and a connection control circuit for each input port, and a multiplexer control circuit for each output port for connecting any of I inputs to any of Z outputs, where I and Z can assume any unique value greater than or equal to two.

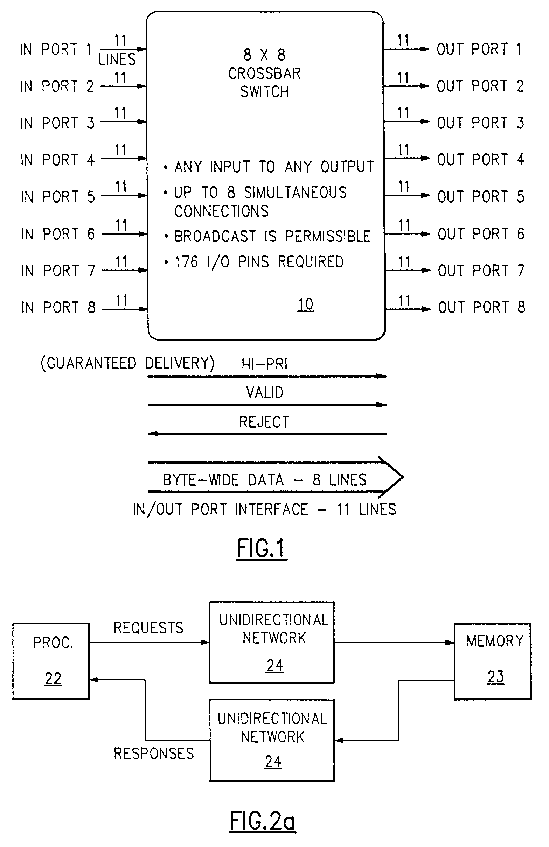

With this background, we turn now to the drawings which illustrate the inventions described here in greater detail. It may be seen that the basic element for the construction of the multi-stage network is chosen here to be an 8x8 crossbar switch 10 as shown in Fig. 1. This 8x8 crossbar switch need not be identical to the ALL-NODE unidirectional switch in order to implement the claimed invention, but that would be our preferred mode of implementation, as described further.

The switch is unidirectional in that it accepts inputs from eight different sources and can connect them to any of eight different destinations. It is capable of supporting eight interconnections simultaneously. The output ports from one crossbar switch can be connected to input ports of other crossbar switches in a cascading fashion to provide multi-stage networks which are larger than 8x8. The data lines 11 are by the switch 10 connected, allowing any input to pass data on line 11 to any output. With eight data lines, up to eight simultaneous connections can be made. Broadcast is permissible, and the broadcast of the related applications is the preferred mode. Guaranteed delivery is provided by the HI-PRI, VALID and REJECT controls, in accordance with the applications filed concurrently herewith, USSN 07/800,652 and 07/799,262, both filed November 27, 1991 (IBM Dockets EN991016A and EN991016B) being the best mode.

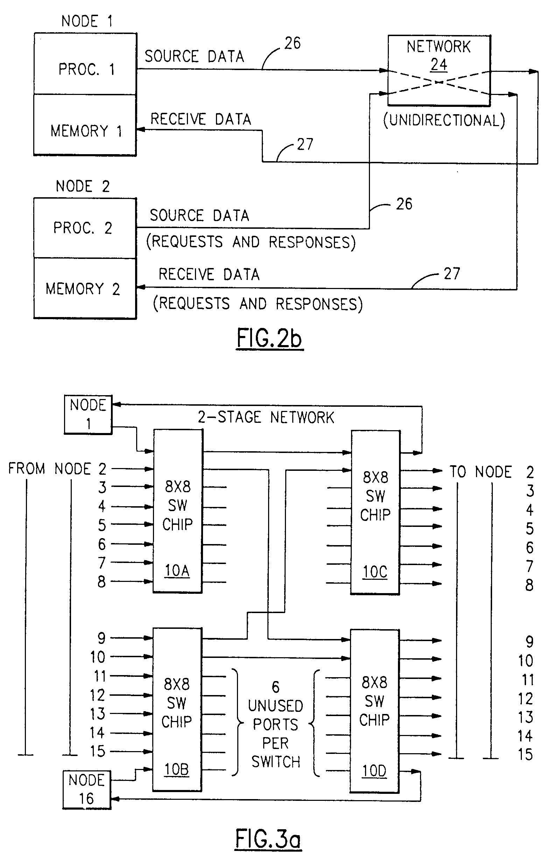

The network itself is unidirectional and it is built from unidirectional 8x8 CROSSBAR SWITCHES. It is possible to accomplish two-way transfers using only a unidirectional network. To explain this, consider Fig. 2a, which shows the interconnection of N processors reresented by the PROC 22 block to N memories represented by the MEMORY block 23 via a multi-stage network. Normally the processors are located on one side of the network, the memories on the other side, and a unidirectional network 24 in each direction is required for the two to communicate. However, modern parallel processors implement a nodal concept, where a node contains both a processor and memory; i.e., both processor and memory reside on the same side of the network as shown in Fig. 2b. Thus, one unidirectional network 24 is sufficient to allow complete communication between all nodes. As shown in Fig. 2b, each node, NODE 1 and NODE 2 being representative of N nodes, has two interfaces to the unidirectional network, one interface 26 to source data to the network and one interface 27 to receive data from the network 24. In turn, the source data leaving any node can come from two sources: 1) REQUEST - a processor can be requesting a memory access from another node, or 2) RESPONSE - the memory can be responding to an access request from another node. The node, therefore, has to time-multiplex these two functions on to the one set of source interface lines to the network in a standard multiplexing manner, familiar to those skilled in the art. Likewise, data destined for any node and arriving over the single receive connection can be routed to either of two places: 1) MEMORY - another node can be requesting a memory access from this node, or 2) PROCESSOR - another node can be returning a memory access requested by the processor.

In summary of the above conclusions, it is entirely feasible to support two-way communication between all nodes using only a single unidirectional network. There are two types of data traversing the network: the sending of REQUESTS and RESPONSES to other nodes and the receiving of REQUESTS or RESPONSES from other nodes. It is this type of network that is most efficient and flexible; therefore, it is the basic network which is expanded by this disclosure to incorporate multiple functions.

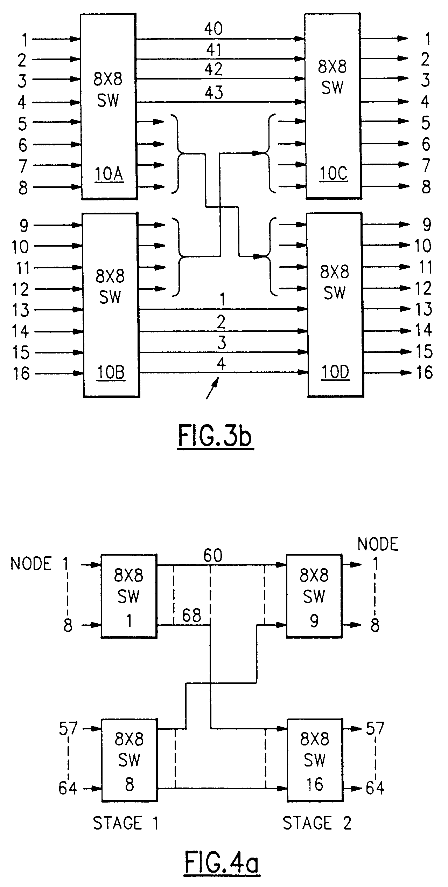

Fig. 3a shows the interconnection of 16 nodes (with NODE 1 - NODE 16 representing the connection) using one MULTI-FUNCTION NETWORK composed of four 8x8 crossbar switch 10 functional blocks. It shows that the 16 nodes can be completely interconnected by only partially using the available crossbar switch output ports; i.e., the right side of each of the two 8x8 switches 10A and 10B that receive the unidirectional inputs from the 16 nodes makes only two valid connections to the left side of each of the two 8x8 switches 10C and 10D that send unidirectional outputs to the 16 nodes. This leaves 6 unused output ports on each of the two 8x8 switches 10 that receive the unidirectional inputs from the 16 nodes, and 6 unused input ports on each of the two 8x8 switches 10 that send unidirectional outputs to the 16 nodes, as shown in Fig. 3a. The said interconnection scheme provides one and only one unique path between any two nodes (no Alternate Paths exist). However, Alternate Paths can be established as shown in Fig. 3b by connecting the six previously unused ports 6 in the manner demonstrated. Now there are four Alternate Paths 40, 41, 42, and 43 whereby any node can be connected to any other node. For instance, node 1 can be connected to send unidirectional REQUESTS or RESPONSES to node 7 equally well over any of 4 different network connections - path 40, 41, 42, or 43.

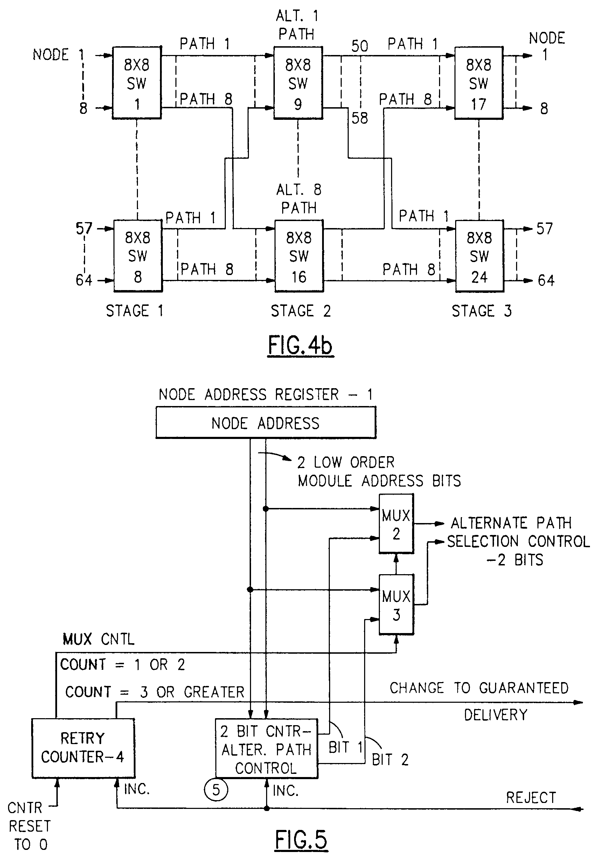

The Alternate Path concept can be applied to any number of nodes. For instance, Fig. 4a shows how a 64 node network built from two stages which has only 1 unique path 60 to 68 between nodes and doesn't have any additional paths can be modified to introduce alternate paths into the network. Fig. 4b shows that by adding a stage and going to a 3-stage network, that the network can be expanded to implement 8 alternate paths.

The disclosed network applies to multistage networks which implement Alternate Paths and which use these Alternate Paths to circumvent network blockage through rearrangeability. The device sending data into the network selects an Alternate Path either randomly or by the preferred embodiment based on the low order address bits of the node being accessed via the network. The sending node tries to establish a connection to the receiving node over the Alternate Path selected. If that path is blocked, it receives back a REJECT indication. If then rearranges its path selection decision and selects a different Alternate Path. The subsequent selection is made either randomly or by the preferred embodiment method of storing the low order address bits of the node being addressed in a binary counter, incrementing the counter by + 1 every time a REJECT indication is received, and then retrying the connection over the newly selected Alternate Path as defined by the binary counter. This rearranging can continue indefinitely as the counter will loop on itself, thus retrying the Alternate Paths in succession or at random until blockage is successfully circumvented. Note, that a network implementing four Alternate Paths, as shown in Figure 3b, would initially select a path based upon the two low order address bits of the addressed node and then store these two bits in a two-bit counter for rearrangeability incrementing.

It is recognized that Heidelberger and Franazek reported in "Traffic Studies of Unbuffered Delta Networks" (RC 14103 (#63219), Computer Science, 10/17/88 and IBM Technical Journal, January, 1991) that their simulations have shown that two types of network traffic exist "Hot" and "Cold". "Cold" being random traffic and "Hot" being concentrated traffic to one particular node. The said studies have shown that "Cold" traffic gets through the network with a very high rate of probability on one of the first several tries at rearrangeability. However, this is not true for "Hot" traffic which becomes less likely to be successfully delivered with each successive retry and tends to clog the network. Therefore, the present disclosed rearrangeability method can be efficiently applied to "Cold" traffic in an unbuffered network, but something additional is required to handle "Hot" traffic.

The solution to the "Hot" traffic problem is to confine the "Hot" traffic to a specific Alternate Path and thus keep it from affecting the "Cold" traffic being transmitted over the other Alternate Paths. In addition, a method is required to handle the "Hot" traffic in an orderly and efficient manner so that it is processed as quickly as possible and in a manner that prevents the "starvation" of any particular node (the blocking of a particular node or nodes from ever getting a connection to a node that is experiencing "Hot" traffic). The approach which provides the required orderly servicing of "Hot" traffic and the prevention of starvation is called "Guaranteed Delivery" or "High Priority Mode" as disclosed in "A Dual Priority Scheme for Simplex Networks" by H.T. Olnowich, et al; USSN 07/800,652 filed November 27, 1991, (IBM DOCKET EN991016A). The said disclosure defines a second level of network interconnectivity as a high priority mode of network operation which reserves partial paths for a "Hot" transmissions up to the point of blockage. In this High Priority mode the blocked stage is then won for the halted "Hot" traffic as soon as the blocked stage becomes available. The transmitter is informed of the removal of the blockage and a retry occurs at the earliest instant of time and only when it is guaranteed to get through the previously blocked stage. See above referenced IBM Docket for a more detailed description of the implementation of Guaranteed Delivery.

Thus, the overall rearrangeability method implemented by the disclosed MULTI-FUNCTION NETWORK handles both "Hot" and "Cold" traffic efficiently is as follows:

1) The first several tries assume that the traffic is "Cold" and establish a first connection through the network based on either a random selection of an Alternate Path or the low order address bits of the node which is receiving the message, as described above. If the Alternate Path selected first has no blockages, the connection is successful and the "Cold traffic" is sent successfully. However, if the first Alternate Path has blockage, the Multi-function Network rejects the connection. A second Alternate path is selected automatically by the hardware either randomly or by incrementing the low order address bits of the receiving node address, as described above. Subsequent, retries can be made in a similar manner until one is successful, the connection is established, and the network transfer is made. In general, the finding of a non-blocked path and subsequent successful message transmission through the Multi-Function Network will occur for all "Cold" traffic.

2) A means is required to detect "Hot" traffic and to then change the mode of transmission over the Multi-Function Network to a second and more efficient mode for the handling of "Hot" traffic. A rearrangeability retry counter is maintained to count the number of times a message is tried over the network (the number a times an Alternate Path selection is made). A programmable threshold is placed on this retry counter, such that after the number of tries defined by the threshold is surpassed, the traffic is reclassified as being "Hot" traffic. For example, assume that the retry threshold is set for a total of 3 tries at establishing a connection through the said network as "Cold" traffic. Then, after the third unsuccessful try, the message is reclassified as "Hot" traffic and a new method of delivery through the MULTI-Function Network is brought into effect. The rearrangeability ("Cold") method of delivery is replaced with the "Guaranteed Delivery" ("Hot") method.

3) "Guaranteed Delivery" can be accomplished by either of two methods: a) selecting one or several unique Alternate Paths which are to receive all "Hot" traffic and no "Cold" traffic, or b) mixing "Hot" and "Cold" traffic on the same Alternate Paths by selecting the "Hot" path on the basis of the low order node address bits (the same bits that defined the first path to be tried under the rearrangeability method). The later is the preferred embodiment that is described for the present invention. For the later and preferred method, the path selected for "Hot" traffic is forced into the Guaranteed Delivery Mode of operation. The advantage of the preferred approach is that since the "Hot" Alternate Path selection is based on the node address, all traffic to that "Hot" node will be forced onto the same Alternate Path regardless of how many nodes are requesting to send messages to that node. This frees up all the remaining Alternate Paths to be used for "Cold" traffic and confines blockage due to "Hot" traffic to one "Hot" Alternate Path (although it is possible for several or many nodes experiencing "Hot" traffic at the same time to cause several or many Alternate Paths to be operating in the "Hot" mode simultaneously - there is no restriction as to how many Alternate Paths can be operating in "Hot" or "Cold" mode simultaneously). Multiple "Hot" spots could require the dedication of more than one Alternate Path, if the low order node address bits are different for different hot spots, but the approach would still handle multiple "Hot" spots efficiently. In addition, it is possible for some "Cold" traffic during normal rearranging to attempt to use the "Hot" Alternate Path, but it will be rejected and via continued rearrangeability go on to find a "Cold" Alternate Path where it does get through the network successfully.

Another, advantage of the preferred approach is that all Alternate Paths are available to handle "Cold" traffic for the normal case of random traffic only -- when no "Hot" traffic exists. Thus for the normal case, the Alternate Paths are all usable to provide increased network bandwidth.

Fig. 5 shows the simple hardware implementation of rearrangeability, hot spot detection, and changing over to Guaranteed Delivery mode. Fig. 5 shows the hardware which permits the finding an unblocked path through a multi-stage network and the circumventing of "Hot" spots in network traffic using a method which is performed automatically and transparently in relation to the software. The implementation shown is for the control of four Alternate Paths and the hardware only requires two 1-bit muxes (MUX-2 and MUX-3) and two counters (Retry Counter-4 and Alternate Path Control Counter 5). The two mux's (multiplexers) provide an output of two encoded bits which define which of the four Alternate Paths is to be selected at any given time. The mux's 2 and 3 are controlled from the Retry Counter-4 which is reset to 0 at the beginning of every new message. Both counters 4 and 5 are incremented based on the REJECT signal indicating that the path that was tried was blocked and a subsequent REJECT indication was issued. When the Retry Counter-4 contains a count of 0, 1, or 2, the mux control is selected to take the Alternate Path number from the output of counter-5 which causes rearrangeability to occur. For all other values of the Retry Counter-4, the mux control is selected to take the Alternate Path number from the low order address bits of the receiving node address as stored in Node Address Register 1. Thus for the very first try and for Guaranteed Delivery, the Alternate Path number comes from the low order bits of the Node Address Register 1. When the Retry Counter-4 contains a count of 3 or more, "Hot" traffic detection is made and the Guaranteed Delivery mode is forced by the hardware. Control counter 5 is loaded from the low order bits of Node Address Register 1 during the first try is increment by each rejection.

The Alternate Path approach also provides better fault tolerance compared to single path systems because many component or wiring failures will only take out 1 or several of the Alternate Paths and still leave some usable paths.

For cases where better fault tolerance or network bandwidth is required, it is possible to implement multiple copies of the simplex network described above -- with each copy implementing its unique set of Alternate Paths.

Clearly, while we have disclosed our preferred embodiments and best mode of practicing our inventions, they can be the basis for much growth in performance of network systems. Those skilled in the art, both now and in the future, will envision further improvements, features and enhancements, even by way of further invention, without departing from the scope of the following claims which should be construed to protect and maintain the proper scope of our inventions in light of other prior developments.

## Claims

1. Multi-stage network system, characterized by

    multi-stage network means for interconnecting a plurality of system elements that are adapted to use the network for communication among the system elements;

    said system having alternate path means for providing the network with several alternate paths over which commands and messages can be sent between any two system elements attached to the network;

wherein the system is provided with rearrangeability means for seeking different alternate paths within said network upon detection of a blocked condition until a non-blocked connection is established between system elements by said rearrangeability means;

wherein assignment means are provided for assigning some of said alternate paths to be used for guaranteed delivery and some of the alternate paths for rearrangeabiltiy.

2. System according to claim 1 wherein said assignment means includes a high priority mode of transfer which guarantees that the connection will be made to an IDLE device as rapidly as possible.

3. System according to claim 1 wherein there is provided a unique interface line between each system element to differentiate guaranteed delivery alternate paths from normal network path.

4. System according to claim 1 wherein is provided alternate path means for providing fault tolerance to the network and for allowing failed components to be by-passed.

5. System according to claim 1 wherein unused connections or added stage paths are used to form alternate paths for communication between system elements of the network.

6. System according to claim 1 wherein is provided retry counter means for controlling the automatic switch-over to a guaranteed delivery mode when a path between system elements is encountered as being blocked or unavailable.

7. System according to claim 1 wherein is provided an alternate unbuffered path between system components.

8. System according to claim 1 wherein the network means utilizes one type of switch for implementing the network paths.

9. System according to claim 1 wherein there is provided retry means for retrying paths between system elements over many paths and over the same path if a routing between system elements is not found for communication upon request.

10. System according to claim 1 wherein a hardware controlled path selection means is provided for selecting which paths between system elements to try and in what order.

11. System according to claim 1 wherein assignment means are provided for assigning any said alternate path to be dynamically selected to be used for either guaranteed delivery or for rearrangeabiltiy completely independent of the mode in which other alternate paths are operating.

12. System according to claim 1 wherein a program controlled means is provided for selecting which method, either rearrangeabiltiy or guaranteed delivery, is implemented at any given time, and at what point the automatic switch over from rearrangeabiltiy to guaranteed delivery is to occur.

13. System according to claim 1 wherein the total function of finding an unblocked path through a multi-stage network and circumventing "Hot" spots in network traffic is implemented and selected completely in hardware, and is performed automatically and transparently in relation to the software.

IN PORT 1 —11— | 8 X 8 CROSSBAR SWITCH | 11 → OUT PORT 1
LINES

IN PORT 2 —11—

IN PORT 3 —11—

IN PORT 4 —11—

IN PORT 5 —11—

IN PORT 6 —11—

IN PORT 7 —11—

IN PORT 8 —11—

8 X 8
CROSSBAR
SWITCH

· ANY INPUT TO ANY OUTPUT
· UP TO 8 SIMULTANEOUS
  CONNECTIONS
· BROADCAST IS PERMISSIBLE
· 176 I/O PINS REQUIRED

<u>10</u>

11 → OUT PORT 1

11 → OUT PORT 2

11 → OUT PORT 3

11 → OUT PORT 4

11 → OUT PORT 5

11 → OUT PORT 6

11 → OUT PORT 7

11 → OUT PORT 8

(GUARANTEED DELIVERY)     HI—PRI ————————→

VALID ————————→

REJECT ←————————

BYTE—WIDE DATA — 8 LINES ————————→

IN/OUT PORT INTERFACE — 11 LINES

<u>FIG.1</u>

PROC.
<u>22</u>

REQUESTS →

UNIDIRECTIONAL
NETWORK
<u>24</u>

→ MEMORY
<u>23</u>

RESPONSES

UNIDIRECTIONAL
NETWORK
<u>24</u>

<u>FIG.2a</u>

9

FIG.2b

FIG.3a

FIG.3b

FIG.4a

FIG.4b

FIG.5